# EUROPÄISCHE PATENTSCHRIFT

(11) **EP 1 295 476 B1**
(45) Veröffentlichungstag und Bekanntmachung des Hinweises auf die Patenterteilung: **21.01.2004**
(21) Anmeldenummer: 01964969.8
(22) Anmeldetag: 11.06.2001
(51) Int. Cl.: H04N 7/173

(54) **ADRESSIERUNG VON TEILNEHMERN IN EINEM DIENSTBEREITSTELLUNGSSYSTEM**
ADDRESSING OF SUBSCRIBERS IN A SYSTEM FOR PROVIDING SERVICES
ADRESSAGE DES PARTICIPANTS DANS UN SYSTEME DE MISE A DISPOSITION DE SERVICES

(30) Priorität: 20.06.2000 DE 10029318; 23.02.2001 DE 10108917
(43) Veröffentlichungstag der Anmeldung: 26.03.2003
(73) Patentinhaber: Fraunhofer-Gesellschaft zur Förderung der angewandten Forschung e.V., 80686 München (DE); Deutsche Telekom AG, 53113 Bonn (DE)
(72) Erfinder: HEUER, André, 85386 Eching (DE); BARTEL-KURZ, Birgit, 91054 Erlangen (DE); PLANKENBÜHLER, Roland, 90475 Nürnberg (DE); GERHÄUSER, Heinz, 91344 Waischenfeld (DE); LAKOMY, Rolf, 48308 Senden (DE)
(74) Vertreter: Schoppe, Fritz, Dipl.-Ing.
(86) Internationale Anmeldenummer: PCT/EP2001/006599
(87) Internationale Veröffentlichungsnummer: WO 2001/099424

(56) Entgegenhaltungen:
- EP-A- 0 963 116
- WO-A-00/33160
- WO-A-99/52285
- US-A- 5 734 720

## Beschreibung

Die vorliegende Erfindung bezieht sich auf die Adressierung von Teilnehmern in einem Dienstbereitstellungssystem, und insbesondere auf die Adressierung von Teilnehmern in einem Conditional-Access-System.

Conditional-Access-Systeme bzw. Systeme mit bedingtem Zugriff sind Zugriffskontrollsysteme, die beispielsweise zum Empfang von gebührenpflichtigen Pay-TV- oder Media-Diensten eingesetzt werden. Bei diesen Conditional-Access-Systemen werden von einer zentralen Sendeeinrichtung oder mehreren dezentralen Sendestellen Daten, wie z.B. gebührenpflichtige TV-Programme, über ein geeignetes Übertragungssystem, wie z.B. Rundfunk, an angeschlossene Endgeräte, wie z.B. Pay-TV-Decoder oder mobile Empfangsgeräte, verteilt. Um den Zugriff auf die bereitgestellten Dienste durch Unbefugte zu verhindern, ist bei diesen Systemen eine Zugriffssteuerung vorgesehen.

Die Zugriffssteuerung erfolgt bei modernen Conditional-Access-Systemen fast ausschließlich auf der Basis von sogenannten Smartcards in Chipkartentechnologie, wobei die Smartcards zur Speicherung eines Sicherheitsalgorithmus und von Teilnehmer- bzw. Subscriber-spezifischen Dienstempfangsberechtigungen dienen.

Die Smartcards bzw. intelligenten Karten sind in den meisten Fällen nicht fest mit einem Endgerät verbunden, sondern können aus diesem entfernt und ausgetauscht werden, wie es beispielsweise bei Pay-TV-Smartcards der Fall ist. Diesbezüglich wird auf die Veröffentlichung in Bernd Seiler (Hrsg.): Taschenbuch der Telekompraxis 1996, Schiele & Schön, Berlin 1996, Jörg Schwenk: "Conditional Access oder Wie kann man den Zugriff auf Rundfunksendungen kontrollieren?" verwiesen.

WO 99/52285A1 beschreibt ein Konzept zur gezielten Werbung unter Verwendung eines Fernsehverteilsystems mit einer Mehrkanalarchitektur. Der Umschaltplan, der an die Terminals verteilt wird, wird jedoch nicht mit einer Angabe versehen, die ein zusammenhängendes Feld innerhalb einer Teilnehmermatrix definiert, die Matrixelemente aufweist, denen die Teilnehmer eindeutig zugeordnet sind. Die Teilnehmer sind vielmehr lediglich auf die in Tabelle E gezeigte Weise in Gruppen eingeteilt, wobei die einzelnen Teile des Umschaltplanes an die Gruppen durch Angabe dieser Gruppe adressiert werden (siehe Seite 50, Zeilen 14 und 15).

Nachteilhaft an dieser Vorgehensweise der Verteilung des Umschaltplanes, daß die Terminals jeweils nur gruppenweise oder einzeln angesprochen werden können.

Ein Problem bei Conditional-Access-Systemen besteht darin, dass ein Service-Provider bzw. Dienstlieferant die bereitgestellten Dienste lediglich für ausgewählte Kunden, die zum Empfang des Dienstes autorisiert sind, zugänglich machen will. Autorisierte Kunden sind solche Kunden, die bestimmte definierte Bedingungen durch den Erwerb von Berechtigungen erfüllen. Die Abwicklung derartiger Berechtigungen erfolgt in der Regel über dasselbe Datenübertragungssystem, über das die Dienste an die Endgeräte verteilt werden. Allgemein stellt sich das Problem, dass der Zugriff auf bestimmte, über diese Datenübertragungssysteme verbreitete Informationen kontrolliert werden soll, dass dieselben aber grundsätzlich von jedermann empfangen werden können.

Dienste, die gegen unberechtigte Zugriffe geschützt werden sollen, können gebührenpflichtig sein oder geheime Informationen enthalten, die vor Missbrauch geschützt werden sollen. Beispiele für solche Dienste sind Hörfunk- oder TV-Programme, digitale Datenzusatzdienste, wie z.B. bei Rundfunksystemen, Informationsdienste, wie z.B. im Internet, Wirtschafts-TV-Dienste oder allgemeine Daten, wie sie beispielsweise bei Funk- oder Leiter-gebundenen Übertragungssystemen vorkommen. Diese Dienste werden sendeseitig in einem Encoding- bzw. Kodier-System verschlüsselt, versendet und in einem Endgerät mit einem entsprechenden Decoding- bzw. Dekodiersystem entschlüsselt.

Bei den Conditional-Access-Systemen werden neben den verschlüsselten Diensten auch EMM- (EMM = Entitlement Management Messages = Berechtigungsverwaltungsmeldungen) und ECM- (ECM = Entitlement Control Messages = Berechtigungsteuerungsmeldungen) Nachrichten übertragen. EMM-Nachrichten können beispielweise dazu dienen, Dienste freizuschalten, zu sperren oder zu verlängern, während ECM-Meldungen dazu dienen können, neue Schlüssel an eine Entschlüsselungseinrichtung bzw. einen Descrambler eines Endgerätes zu übertragen.

Eine EMM- bzw. eine ECM-Nachricht kann aus mehreren Datenfeldern bestehen, die dann jeweils als Parameter einer Nachricht zu interpretieren sind. Bei einer Dienstfreischaltung können in einer EMM-Nachricht beispielsweise die Adresse des entsprechenden Dienstkunden bzw. Subscribers, dessen Dienst freigeschaltet werden soll, die ID- bzw. IdentifikationsNummer des Dienstes und weitere Parameter kodiert sein. Die Anzahl der Parameter und deren Kodierung in einer EMM- bzw. ECM-Nachricht sind abhängig von dem jeweiligen Conditional-Access-System, von den Anforderungen des jeweiligen Dienstlieferanten (Service Provider) und von der Dienststruktur.

Bei heute eingesetzten Conditional-Access-Systemen weisen alle Datenfelder der EMM- bzw. ECM-Nachrichten eine feste Länge bzw. Stellenzahl auf. Zur Kodierung der Teilnehmeradresse kann beispielsweise ein Vier-Byte-Wert verwendet werden. Die Länge bzw. Stellenzahl solcher fest definierter Datenfelder ist für einen späteren Zeitpunkt, d.h. einen Zeitpunkt nach der Einführung des Systems auf dem Markt, nicht mehr änderbar, da die Endgeräte bei der Dekodierung der EMM- bzw. ECM-Nachrichten auf die Länge der Datenfelder abgestimmt sind. Die Definition der festen Länge eines Datenfeldes, wie z.B. für die Teilnehmeradresse, ist deshalb meistens ein Kompromiss aus einem möglichst großen Wertebereich für das entsprechende Datenfeld und einer möglichst kurzen EMM- bzw. ECM-Nachrichtenlänge. In dem Fall der Teilnehmeradressen muss die Länge des Datenfeldes beispielsweise möglichst groß sein, da die Teilnehmeranzahl nicht vorhersagbar ist. Ist der Wertebereich zu klein gewählt worden, und übersteigt zu einem späteren Zeitpunkt die Teilnehmerzahl den Wertebereich, sind neue Teilnehmer nicht mehr adressierbar bzw. kodierbar. Andererseits sollte die Länge des Datenfeldes möglichst klein sein, um die Gesamtlänge der Nachrichten möglichst klein zu halten und dadurch die für die Übertragung der Nachrichten notwendige Kanalkapazität gering zu halten.

Ein Nachteil der im Vorhergehenden beschriebenen üblichen Conditional-Access-Systeme besteht folglich darin, dass die feste Länge der Datenfelder einen Wertebereich kodierbar machen, der größer ist als derjenige, der zu dem jeweiligen Zeitpunkt notwendig wäre. Das Problem wird bei den EMM-Nachrichten zusätzlich dadurch verstärkt, dass dieselben häufig an eine Mehrzahl von Teilnehmern einzeln verteilt werden müssen, so dass die zu dem jeweiligen Zeitpunkt unbenutzten Bits, die für zukünftige Systemerweiterungen vorgesehen sind, die Übertragungskapazität des Übertragungssystems mehrfach, d.h. pro adressiertem Teilnehmer, belasten.

Die Aufgabe der vorliegenden Erfindung besteht darin, ein Verfahren und eine Vorrichtung zur Adressierung von Teilnehmern in einem Dienstbereitstellungssystem zu schaffen, die eine effektivere Adressierung ermöglichen.

Diese Aufgabe wird durch ein Verfahren gemäß Anspruch 1 und eine Vorrichtung gemäß Anspruch 6 gelöst.

Ein erfindungsgemäßes Verfahren zum Adressieren von Teilnehmern in einem Dienstbereitstellungssystem, wobei den Teilnehmern Attribute zugeordnet sind, umfasst das Anordnen der Teilnehmer in einer mehrdimensionalen Teilnehmermatrix, derart, dass eine Mehrzahl von Teilnehmern, die zumindest ein Attribut gemeinsam haben, in einer vorbestimmten Beziehung zueinander angeordnet sind. Es ist ferner das gemeinsame Adressieren der Mehrzahl von Teilnehmern unter Ausnutzung der Beziehung der Teilnehmer in der Teilnehmermatrix vorgesehen.

Eine erfindungsgemäße Vorrichtung zum Adressieren von Teilnehmern in einem Dienstbereitstellungssystem, wobei den Teilnehmern Attribute zugeordnet sind, umfasst eine Einrichtung zum Anordnen der Teilnehmer in einer mehrdimensionalen Teilnehmermatrix, derart, dass eine Mehrzahl von Teilnehmern, die zumindest ein Attribut gemeinsam haben, in einer vorbestimmten Beziehung zueinander angeordnet sind. Es ist ferner eine Einrichtung zum gemeinsamen Adressieren der Mehrzahl von Teilnehmern unter Ausnutzung der Beziehung der Teilnehmer in der Teilnehmermatrix vorgesehen.

Der vorliegenden Erfindung liegt die Erkenntnis zugrunde, dass die Tatsache, dass bei einem System Teilnehmer mit einem bestimmten gemeinsamen Attribut mit höherer Wahrscheinlichkeit gemeinsam adressiert werden als solche, denen kein Attribut gemeinsam ist, ausgenutzt werden kann, um die Adressierung effektiver zu machen und dadurch den zum Verteilen von an eine Gruppe gerichteten Nachrichten notwendigen Übertragungsaufwand zu verringern. Gemäß der vorliegenden Erfindung wird dieser Umstand dadurch ausgenutzt, dass Teilnehmer mit zumindest einem gemeinsamen Attribut in einer mehrdimensionalen Teilnehmermatrix in einer vorbestimmten Beziehung zueinander angeordnet werden, die daraufhin ausgenutzt werden kann, um die Teilnehmer gemeinsam zu adressieren. Durch die gemeinsame Adressierung wird es ermöglicht, dass eine Nachricht, die an eine Mehrzahl von Teilnehmern gerichtet ist, nicht einzeln an jeden der Teilnehmer gesendet werden muss, wodurch die zur Verteilung der Nachricht erforderliche Kanalkapazität enorm verringert werden kann. Durch die erfindungsgemäße Adressierung wird folglich bezüglich der Teilnehmerverwaltung eine ökonomische und effiziente Anwendung eines Conditional-Access-Systems zur Dienstverschlüsselung auch dann ermöglicht, wenn zur Übertragung hochwertiger Dienste an eine große Teilnehmeranzahl nur eine geringe Datenübertragungsrate zur Verfügung steht.

Gemäß einem Ausführungsbeispiel der vorliegenden Erfindung umfasst die vorbestimmte Beziehung, in der die Mehrzahl von Teilnehmern mit zumindest einem gemeinsamen Attribut angeordnet sind, eine Aneinanderreihung derselben entlang der Richtung zumindest einer vorbestimmten Dimension der Teilnehmermatrix, wie z.B. entlang einer Zeile oder einer Ebene der Matrix.

Gemäß einem Ausführungsbeispiel der vorliegenden Erfindung umfasst der Schritt des gemeinsamen Adressierens (110) das Definieren eines zusammenhängenden Feldes innerhalb der Teilnehmermatrix (140; 200; 300, 310), wobei diejenigen Teilnehmer gemeinsam adressiert sind, die sich in dem Feld befinden. Das Definieren eines Feldes kann das Angeben einer Zeilennummer, einer Spaltennummer oder zweier Matrixpositionen aufweisen, wobei durch die Zeilennummer eine Zeile, die Spaltennummer eine Spalte und die zweier Matrixpositionen ein rechteckiges Feld definiert wird, das durch die Matrixposition aufgespannt wird.

Gemäß einem weiteren Ausführungsbeispiel der vorliegenden Erfindung ist das Dienstbereitstellungssystem ein System mit bedingtem Zugriff bzw. ein Conditional-Access-System, wobei die Attribute die Dienste, die von den Teilnehmern empfangen werden sollen, oder Vertragsdaten der Verträge sind, mit denen die Teilnehmer die Dienste beantragt haben.

Bevorzugte Ausführungsbeispiele der vorliegenden Erfindung werden nachfolgend bezugnehmend auf die beiliegenden Zeichnungen näher erläutert. Es zeigen:
- Fig. 1: Ein Blockdiagramm eines Systems, bei dem die vorliegende Erfindung anwendbar ist;
- Fig. 2: eine Skizze, anhand der die Funktionsweise einer Vorrichtung zur Adressierung von Teilnehmern gemäß einem Ausführungsbeispiel der vorliegenden Erfindung beschrieben wird;
- Fig. 3: eine Skizze, die die Adressierung von Teilnehmern und den Aufbau einer Teilnehmeradressmatrix gemäß einem Ausführungsbeispiel der vorliegenden Erfindung darstellt; und
- Fig. 4: eine Skizze, anhand der eine geeignete Anordnung von Teilnehmern in einer Teilnehmeradressmatrix, von der zwei Ebenen gezeigt sind, gemäß einem speziellen Ausführungsbeispiel der vorliegenden Erfindung erläutert wird.

Zunächst wird im folgenden ein Conditional-Access-System beschrieben, bei dem die vorliegende Erfindung vorteilhaft angewendet werden kann. Das Conditional-Access-System, das beispielsweise zur gesteuerten Übertragung von gebührenpflichtigen Pay-TV-Programmen eingesetzt wird, umfasst eine zentrale Sendeeinrichtung 10 sowie eine Empfangseinrichtung 20, wie z.B. einen Decoder. Die zentrale Sendeeinrichtung 10 und die Empfangseinrichtung 20 sind über ein Datenübertragungssystem 30 verbunden, wie z.B. über Rundfunk, ein Glasfasernetz oder andere drahtlose oder drahtgebundene Übertragungssysteme. Die zentrale Sendeeinrichtung 10 umfasst eine Kodier/Verschlüsselungs-Einrichtung 40, während die Empfangseinrichtung 20 eine Dekodier/Entschlüsselungs-Einrichtung 50 umfasst. Die Sendeeinrichtung 10 sendet über das Datenübertragungssystem 30 durch die Kodier/Verschlüsselungs-Einrichtung 40 kodierte bzw. verschlüsselte Daten 60 an die Empfangseinrichtung 20, bei der die kodierten bzw. verschlüsselten Daten 60 durch die Dekodier/Entschlüsselungs-Einrichtung 50 dekodiert bzw. entschlüsselt werden. Die verschlüsselten Daten 60 sind beispielsweise verschlüsselte TV-Programme. Der zur Entschlüsselung erforderliche kryptographische Schlüssel ist auf einer Smartcard 70, wie z.B. einer Pay-TV-Smartcard, gespeichert, die über eine geeignete Vorrichtung 80, wie z.B. einen Kartenleser, in den die Smartcard 70 austauschbar eingefügt ist, mit der Dekodier/Entschlüsselungs-Einrichtung 50 verbunden ist, wobei jedoch anstatt einer Smartcard beliebige Single-Chipmodule verwendet werden können.

Nachdem im Vorhergehenden der Aufbau des Conditional-Access-Systems beschrieben worden ist, wird im folgenden kurz die Funktionsweise desselben beschrieben. Die zentrale Sendeeinrichtung 10 verteilt über das Datenübertragungssystem 30 verschlüsselte Daten 60 an eine Mehrzahl von Empfangseinrichtungen 20. Die sendeseitige Verschlüsselung wird durch die Kodier/Verschlüsselungs-Einrichtung 40 durchgeführt. Die empfangsseitige Entschlüsselung wird durch die Dekodier/Entschlüsselungs-Einrichtung 50 durchgeführt, wobei der kryptographische Schlüssel, der zur Entschlüsselung der Daten 60 erforderlich ist, in Form eines Kontrollworts auf der Smartcard 70 gespeichert ist, und dort von der Dekodier/Entschlüsselungs-Einrichtung 50 gelesen werden kann. Auf diese Weise ist sichergestellt, dass lediglich Besitzer mit einer geeigneten Smartcard die verschlüsselten Daten, die die bereitgestellten Dienste darstellen, empfangen können.

Neben der Verteilung der eigentlichen Daten bzw. Dienste ist die zentrale Sendeeinrichtung 10 ferner für die Verwaltung der Teilnehmer zuständig. Diese Teilnehmerverwaltung bei dem Conditional-Access-System umfasst solche Aufgaben wie z.B. die Verwaltung von Systemadressen, die Freischaltung, Änderung, wie z.B. Verlängerung, und Sperrung von Empfangsberechtigungen sowie die Verwaltung der Teilnehmeradressen. Um diese Aufgaben durchführen zu können, ist jede Komponente des Conditional-Access-Systems durch eine individuelle Adresse adressierbar. Die verschiedenen Adressen des Systems umfassen die Adresse des Single-Chipmoduls 70, die von dem jeweiligen Hersteller einmalig vergeben wird, die Adresse des Dienstproviders bzw. der zentralen Sendeeinrichtung 10, die in der Regel von dem Betreiber des Conditional-Access-Systems eindeutig vergeben wird, die Dienstadressen, die von dem Dienstprovider vergeben und innerhalb der Dienste des Providers eindeutig sind, und die Teilnehmeradresse, die einem Teilnehmer innerhalb des Dienstes eindeutig zugeordnet ist. Jeder Teilnehmer kann innerhalb des Systems durch die Angabe der Smartcard-Adresse, der Dienstadresse und der Teilnehmeradresse eindeutig adressiert werden, die neben dem kryptographischen Schlüssel und Dienstberechtigungen ebenfalls auf der Smartcard 70 gespeichert sind.

Zur Durchführung der Teilnehmerverwaltung werden mittels der eindeutigen Adressierung neben den Diensten bzw. den verschlüsselten Daten 60, die im folgenden als nicht weiter veränderbare, verschlüsselte Nutzdaten bezeichnet werden, beispielsweise Berechtigungsmeldungen gezielt an eine bestimmte oder mehrere bestimmte Smartcards übertragen, wobei die Berechtigungsmeldungen verschlüsselt oder unverschlüsselt sein können. Beispiele für Daten, die in Berechtigungsmeldungen an Teilnehmer versendet werden, sind
1. regelmäßig übertragene Kontrollwörter zur Dienstentschlüsselung sowie von Bedingungen, unter denen ein Dienst von einem Teilnehmer empfangen werden darf,
2. Meldungen zur Freischaltung oder Sperrung von Diensten,
3. Meldungen zur Aussendung von Dienstverlängerungen,
4. Meldungen, die Änderungen von Zugriffskontrollmodi, wie z.B. einem Abonnement, einer Zahlung pro Nutzung oder einer Zahlung pro Zeitdauer enthalten,
5. Mitteilungen von Dienständerungen, und
6. sonstige Meldungen, die an einzelne Teilnehmer oder an eine Gruppe von Teilnehmern gerichtet sind.

Diese Meldungen können an einzelne Dienstteilnehmer bzw. Subscriber oder an eine Gruppe von Teilnehmern gerichtet sein. Die Meldungen können nach Berechtigungssteuerungsmeldungen (ECM) und in Berechtigungsverwaltungsmeldungen (EMM) unterschieden werden, wobei die ECM-Nachrichten die erste der im Vorhergehenden aufgelisteten Art von Berechtigungsmeldungen, d.h. die regelmäßige Übertragung von Kontrollwörtern, aber auch die Sperrung von Diensten betreffen können, während die EMM-Nachrichten die restlichen Berechtigungsmeldungsarten betreffen.

Wie es im Vorhergehenden erwähnt wurde, werden die Daten 60 verschlüsselt, indem die Daten durch einen Verschlüsselungsalgorithmus mittels Kontrollwörtern verschlüsselt werden. Da die ECM-Nachrichten verschlüsselt an alle Kunden übertragen werden, müssen alle autorisierten Kunden den gleichen Schlüssel zum Entschlüsseln des Kryptogramms in gespeicherter Form auf ihrer Smartcard 70 aufweisen. Die Kontrollwörter werden in relativ kurzen Abständen ausgetauscht, um das Erkennen von Verschlüsselungsmustern für potentielle Angreifer unmöglich zu machen. Hierzu werden dieselben in ECM-Nachrichten an die Anfangseinrichtung 20 übertragen und in der Smartcard 70 gespeichert. In ECM-Nachrichten werden neben neuen Kontrollwörtern der Empfangseinrichtung 20 oder den Sperrmeldungen auch die Bedingungen mitgeteilt, unter denen die Dienste oder Daten 60 empfangen werden dürfen. Jedem Dienst sind ein Kontrollwort und bestimmte Empfangsbedingungen zugeordnet. Die ECM-Nachrichten sind daher jedem einer Mehrzahl von Diensten getrennt zugeordnet.

EMM-Nachrichten sind an spezielle Teilnehmer gerichtet, um beispielsweise Empfangsberechtigungen, die in der Smartcard 70 gespeichert sind, zu setzen oder zu ändern. Die EMM-Nachrichten müssen folglich an die individuelle Adresse bzw. die Teilnehmeradressen des Kunden, die auf der Smartcard 70 gespeichert ist, übertragen werden. Um die Kundenadressen und EMM-Nachrichten gegen Veränderungen zu schützen, und um sicherzustellen, dass lediglich der Dienstprovider bzw. die zentrale Sendeeinrichtung 10 EMM-Nachrichten erzeugen kann, kann, da die individuellen Adressen in den EMM-Nachrichten in unverschlüsselter Form vorliegen, ein Vervielfältigungsschutz nur über ergänzende Informationen erreicht werden, die in der Smartcard 70 unauslesbar gespeichert sind. Diese ergänzenden Informationen umfassen einen persönlichen Schlüssel, der mit der Kundenadresse bzw. der Teilnehmeradresse verknüpft ist. Da EMM-Nachrichten nicht fest mit dem Dienst-Inhalt sondern mit der logischen Adresse der Smartcard 70 verknüpft sind, können EMM-Nachrichten an einzelne Kunden oder an Gruppen von Kunden bzw. Teilnehmern gerichtet sein.

Die Teilnehmer des Conditional-Access-Systems können nach unterschiedlichen Gesichtspunkten gruppiert werden, wie z.B. nach der Gruppe von Teilnehmern gleicher Dienste, der Gruppe von Teilnehmern gleicher Zugriffsmodi, wie z.B. Abonnement, Zahlung pro Nutzung, Zahlung pro Programm, der Gruppe von Teilnehmern gleicher Interessen, wie z.B. Sport-TV, Spielfilm-TV, und der Gruppe von Teilnehmern gleicher Altersstufe. Bei der Gruppenbildung sind auch Kombinationen unterschiedlicher Gruppen möglich, wobei die größtmögliche Gruppe alle Teilnehmer des Conditional-Access-Systems umfasst.

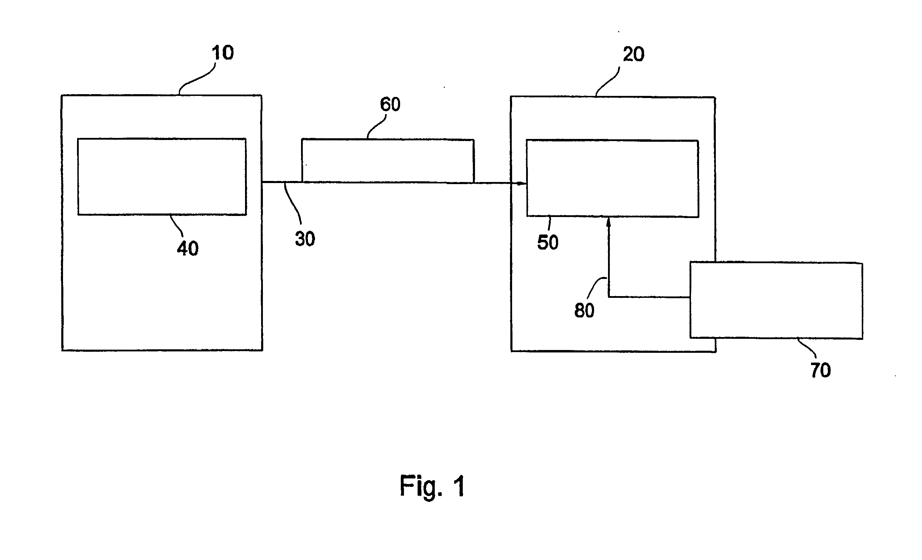

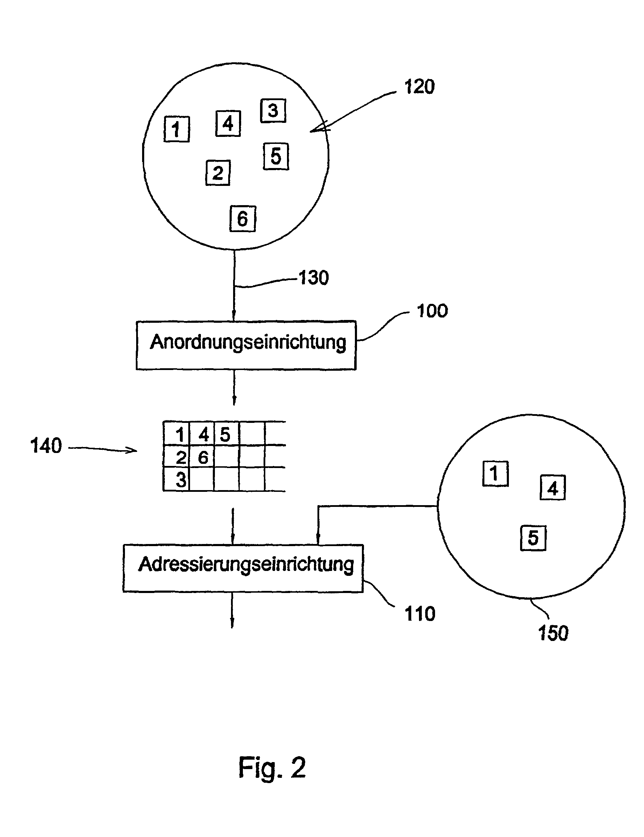

Bezugnehmend auf Fig. 2 wird im folgenden die Funktionsweise einer Vorrichtung zum Adressieren von Teilnehmern gemäß einem Ausführungsbeispiel der vorliegenden Erfindung beschrieben, die in der zentralen Sendeeinrichtung 10 von Fig. 1 integriert ist, um die Teilnehmerverwaltung bzw. das Teilnehmermanagement zu vereinfachen, und die entweder in Software, Firmware oder Hardware implementiert sein kann. Insbesondere wird die Vorrichtung von Fig. 2 zur Verwaltung der Teilnehmeradressen und zur effizienteren Adressierung von Teilnehmern verwendet.

Wie es in Fig. 2 gezeigt ist, besteht die Vorrichtung aus einer Anordnungseinrichtung 100 sowie einer Adressierungseinrichtung 110. Die Anordnungseinrichtung 100 weist zu jedem Zeitpunkt Informationen darüber auf, welche Teilnehmer in dem Conditional-Access-System vorhanden sind, und welche Attribute, wie z.B. Zugriffsmodus, Alter oder dergleichen, diese Teilnehmer aufweisen. Die Teilnehmer sind in Fig. 2 durch Quadrate 120 dargestellt, die zur Veranschaulichung durchnumeriert sind, wobei ein Pfeil 130 darstellen soll, dass die Anordnungseinrichtung 100 die Informationen über die Teilnehmer 120 aufweist. Die Anordnungseinrichtung 100 ordnet die Teilnehmer in einer Teilnehmeradressmatrix 140 an, wie es im folgenden beschrieben werden wird, und gibt die Informationen der Teilnehmeradressmatrix 140 an die Adressierungseinrichtung 110 weiter. Die Adressierungseinrichtung 110 verwendet die Informationen der Teilnehmeradressmatrix 140, um eine zu adressierende Anzahl von Teilnehmern 150 möglichst effektiv zu adressieren.

In dem in Fig. 2 dargestellten Beispiel sind in die zu adressierenden Teilnehmer 1, 4 und 5 beispielsweise alle in derselben Zeile der Teilnehmeradressmatrix 140 nebeneinander angeordnet, so dass die Angabe der Zeilennummer 1 und der Spaltennummern 1 und 3 (wobei die Zeilen- und Spaltennummern von der oberen linken Ecke aus gezählt werden sollen) ausreichend ist, um anzugeben, von wo bis wo in der Zeile 1 die adressierten Teilnehmer liegen, und somit ausreichend ist, um die gemeinsame Adressierung durchzuführen. In dem einfachsten Fall, bei dem sich lediglich die zu adressierenden Teilnehmer in der entsprechenden Zeile befinden und sonst keiner, wie es in Fig. 2 gezeigt ist, reicht zur gemeinsamen Adressierung die Angabe der Zeilennummer aus. In dem Fall, dass beispielsweise die Teilnehmer 1, 2 und 3 adressiert werden sollen, reicht dementsprechend die Angabe der Spaltennummer aus. In dem Fall, dass die Teilnehmer 1, 2, 4, 6 adressiert werden sollen, reicht es aus, ein Feld zu definieren, wie es beispielsweise durch Angabe zweier Spaltenindizes und zweier Zeilenindizes möglich ist, d.h. der obersten und untersten Zeile sowie der linken äußeren und der rechten äußeren Spalte, oder durch Angabe des oberen linken und des unteren rechten Teilnehmers, die das Feld aufspannen. In jedem dieser Fälle ist statt wie herkömmlich mehrerer Nachrichten lediglich eine Nachricht mit der gemeinsamen Adressierung erforderlich.

Die Empfangsgeräte der Teilnehmer überprüfen eine empfangene Nachricht daraufhin, ob sich die Adresse des Teilnehmers in dem durch die gemeinsame Adressierung festgelegten Bereich, wie z.B. der Zeile, der Spalte oder dem Feld der Teilnehmeradressmatrix 140 befindet. Falls dies der Fall ist, ist der entsprechende Teilnehmer Adressat der Nachricht. Um den Empfangseinrichtungen anzuzeigen, ob die gemeinsame Adressierung beispielsweise die Angabe einer Zeilennummer, einer Spaltenummer oder eines Feldes enthält, kann die Adressierungseinrichtung der Nachricht eine entsprechende Beziehungsartangabe hinzufügen.

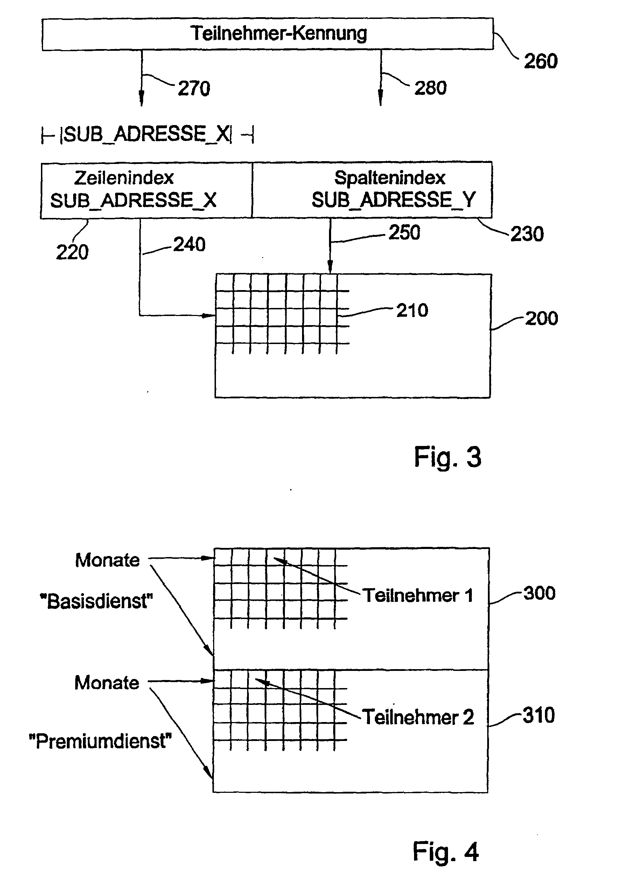

Bezugnehmend auf Fig. 3 wird zunächst näher beschrieben, wie die Adressierungseinrichtung 110 unter Verwendung der Teilnehmeradressmatrix Teilnehmer adressieren kann. Lediglich zur Veranschaulichungszwecken zeigt Fig. 3 eine zweidimensionale Teilnehmeradressmatrix 200. In der Teilnehmeradressmatrix 200 sind alle Teilnehmer des Systems einem unterschiedlichen Element der Teilnehmeradressmatrix 200 zugeordnet, wobei in Fig. 3 lediglich ein Teil der Teilnehmermatrix 200 gezeigt ist. In dem vorliegenden Fall sind die Teilnehmer in der Teilnehmeradressmatrix 200 derart angeordnet bzw. den Matrixelementen derart zugeordnet, dass die Teilnehmer, die sich in einer Zeile der Teilnehmeradressmatrix 200 befinden, der selben Teilnehmergruppe angehören, wie z.B. der Gruppe von Teilnehmern gleicher Dienste, wie z.B. Sportkanal oder Moviekanal. Zur eindeutigen Adressierung eines Teilnehmers 210 ist folglich lediglich die Angabe des entsprechenden Zeilenindexes SUB_ADRESSE_X (SUB = Subscriber = Teilnehmer) 220 sowie des Spaltenindexes SUB_ADRESSE_Y 230 erforderlich, wie es durch Pfeile 240 und 250 angezeigt ist. Zur Adressierung eines Teilnehmers 210 beispielsweise in einer EMM-Nachricht werden der Zeilenindex 220 und der Spaltenindex 230 derart zusammengefasst, dass die höherwertigen Bits den Zeilenindex 220 und die übrigen Bits den Spaltenindex 230 darstellen.

Die Länge bzw. die Stellenzahl des Zeilenindexes 220 und Spaltenindexes 230 zur Definition einer Teilnehmeradresse 210 ist abhängig von der Definition der Teilnehmeradressmatrix 200. Im folgenden soll |SUB₋ ADRESSE_X| die Länge bzw. Stellenzahl des Zeilenindexes SUB_ADRESSE_X in Bits darstellen, während |SUB_ ADRESSE_Y| die Länge des Spaltenindexes SUB_ADRESSE_Y in Bits darstellen soll. Da, wie im Vorhergehenden erwähnt, in dem vorliegenden Fall der Zeilenindex 220 einer bestimmten Teilnehmergruppe zugeordnet ist, hängt die Länge des Zeilenindexes 220 von der Anzahl von zu unterscheidenden Teilnehmergruppen in dem System ab. In dem Fall beispielsweise, dass die Zeilen der Teilnehmeradressmatrix 200 Gruppen von Teilnehmern gleicher Dienste enthalten, entspricht die Länge Zeilenindexes 220 der zur dualen Darstellung notwendigen Stellenzahl und wird in Verbindung mit der Freischaltung des Dienstes einmalig an alle Systemteilnehmer übertragen und auf deren Smartcards gespeichert. Bei Bedarf bzw. bei steigender Anzahl von Diensten kann die auf den Smartcards gespeicherte Stellenzahl aktualisiert werden. In weiteren an diese Smartcards gerichteten EMM-Nachrichten, die sich auf einen bereits freigeschalteten Dienst beziehen, ist daher die Angabe der Länge des Zeilenindexes aus Effizienzgründen nicht mehr erforderlich.

Die Länge des Spaltenindexes 230 ist entweder ebenfalls fest oder variabel. In dem Fall, dass der Spaltenindex 230 eine feste Länge aufweist, muss die Länge des Spaltenindexes 230 derart gewählt werden, dass auch bei steigender Teilnehmeranzahl des Systems sichergestellt ist, dass die Anzahl von Bits des Spaltenindexes 230 ausreicht, um die hohe Anzahl von Teilnehmern kodieren zu können. In dem Fall einer variablen Länge des Spaltenindexes wird entweder an denselben ein die Länge angebendes Präfix angefügt, oder die Länge des Spaltenindexes wird bei den Empfangseinrichtungen gespeichert und bei Bedarf aktualisiert.

Der Zeilenindex 220 und der Spaltenindex 230 ergeben eine eindeutige Teilnehmerkennung 260 für den Teilnehmer 210, wie es in Fig. 3 durch Pfeile 270 und 280 dargestellt ist. Bei einer EMM-Nachricht, die an einen einzelnen Teilnehmer 210 gerichtet ist, muss die vollständige Teilnehmerkennung 260 aus Zeilenindex 220 und Spaltenindex 230 verwendet werden.

In Bezug auf Fig. 4 wird im folgenden anhand eines speziellen Ausführungsbeispiels beschrieben werden, wie die Anordnung der Teilnehmer in einer Teilnehmeradressmatrix vorteilhaft dazu verwendet werden kann, um Nachrichten, die an eine Mehrzahl von Teilnehmern gerichtet sind, effektiver zu adressieren bzw. zu übertragen.

Bei dem speziellen Ausführungsbeispiel von Fig. 4 besteht das Conditional-Access-System aus einem Informationsbereitstellungssystem, das zwei Dienste, d.h. einen Basisdienst und einen Premiumdienst, über ein Rundfunksystem zum mobilen Empfang kostenpflichtig bereitstellt. Die Teilnehmer können zwischen dem Basisdienst, der aktuelle Verkehrsinformationen zur Navigationsunterstützung in Fahrzeugen enthält, und dem Premiumdienst auswählen, der zusätzlich zu den Verkehrsdaten als weitere höherwertige Dienststufe einen Informationsdienst aufweist, der aus aktuellen Nachrichten, besonderen Standortinformationen bzw. POI- (Points-of-Interest-) Informationen, wie z.B. über Hotels oder Gaststätten, und Veranstaltungshinweisen besteht.

Der Basis- und Premium-Dienst soll den Teilnehmern als Abonnement für ganzzahlige Vielfache eines Jahres angeboten werden. Der kleinste noch abrechnungsfähige Zeitraum soll einen Monat betragen, wobei ein Abonnement mit dem Tag der ersten Freischaltung beginnt. Anschließend ist eine regelmäßige Verlängerung der Freischaltung erforderlich, wobei Abonnementverlängerungen ebenfalls nur für ganzzahlige Vielfache eines Jahres möglich sein sollen, d.h. für mindestens ein Jahr.

Aus Gründen der möglichst wirtschaftlichen Nutzung des verfügbaren Frequenzbereichs, und um eine möglichst hohe Aussendewiederholrate zur Steigerung der Empfangssicherheit des Dienstes im Fahrzeug des jeweiligen Teilnehmers zu erzielen, muss die Sendekapazität, die neben der Aussendung der eigentlichen Nutzdaten bzw. Dienste zur Teilnehmerverwaltung erforderlich ist, gering sein, was durch die Adressierung gemäß einem Ausführungsbeispiel wie folgt erzielt wird.

Bei dem im Vorhergehenden beschriebenen System können die Teilnehmer nach den Dienstkategorien "Basis" bzw. "Premium" unterteilt werden. Zusätzlich können die Teilnehmer abhängig von dem Tag der ersten Freischaltung jeweils in weitere zwölf Gruppen unterteilt werden, d.h. in Gruppen von Teilnehmern mit einer Freischaltung im selben Monat.

Eine geeignete Adressmatrix für das im Vorhergehenden beschriebene Informationsbereitstellungssystem besteht aus einer dreidimensionalen Matrix, die entsprechend den beiden Dienst kategorien Basis bzw. Premium in zwei Ebenen bzw. zwei zweidimensionale Teilnehmeradressmatrizen untergliedert ist, die jeweils zwölf Zeilen, eine für jeden Monat, d.h. die kleinste noch abrechnungsfähige Zeiteinheit, aufweisen. Um den Aufbau der dreidimensionalen Teilnehmeradressmatrix zu veranschaulichen, ist dieselbe in Fig. 4 als zwei getrennte zweidimensionale Teilnehmeradressmatrizen 300 und 310 gezeigt, von denen sich die erste 300 auf den Basisdienst und die zweite 310 auf den Premiumdienst bezieht.

Wie es in Fig. 4 gezeigt ist, ist ein Teilnehmer 1, dessen Datum des Abonnementsbeginns im Januar liegt und der den Basisdienst gewählt hat, in der Teilnehmeradressmatrix 300 in der ersten Zeile angeordnet, während ein Teilnehmer 2, dessen Abonnementbeginn ebenfalls im Januar liegt, der aber den Premiumdienst gewählt hat, in der Teilnehmeradressmatrix 310 in der ersten Zeile angeordnet ist. Bei diesem Ausführungsbeispiel besteht eine vollständige Teilnehmeradresse aus drei Indizes, nämlich einem Zeilen-, einem Spalten- und einem Ebenenindex, der angibt, in welcher Ebene der Teilnehmer liegt.

Um die erzielbare Einsparung von Sendekapazität durch die in Fig. 4 gezeigte Anordnung von Teilnehmern in einer Teilnehmeradressmatrix zu veranschaulichen, wird der Fall betrachtet, dass an Teilnehmer mit einem laufenden Abonnement, die den Premiumdienst im März oder April abonniert haben, eine bestimmte Nachricht ausgesendet werden soll. Hierzu reicht beispielsweise die Angabe der Ebene "Premiumdienst" und der Zeilen 3 und 4 aus, um die entsprechenden Kunden mit dieser Nachricht zu erreichen.

Bei einem speziellen Ausführungsbeispiel werden hierzu zwei Nachrichten benötigt. Durch die Adressierungseinrichtung werden die eine Nachricht durch die Angaben "Zeilennummer 3", "Spaltennummer 1" und "Spaltennummer des äußersten rechten Teilnehmers der Zeile 3" und die andere durch die Angaben "Zeilennummer 4", "Spaltennummer 1" und "Spaltennummer des äußersten rechten Teilnehmers der Zeile 4" adressiert. Jedes Empfangsgerät, das mit dem System verbunden ist und die Nachrichten empfängt, vergleicht die auf der Smartcard gespeicherte Teilnehmeradresse, die aus einer Zeilennummer und einer Spaltennummer besteht, mit den in den Nachrichten enthaltenen Angaben und überprüft, ob die auf der Smartcard gespeicherte Zeilen- und die Spaltennummer in den definierten Abschnitten der Matrix liegt. Folglich können durch zwei abgesehen von der Adressierung identische Nachrichten eine Vielzahl von Teilnehmern erreicht werden, ohne dass die Notwendigkeit dafür besteht, den identischen Teil einzeln an alle adressierten Teilnehmer zu senden.

In der Praxis werden beispielsweise aufgrund von Abonnementkündigungen innerhalb der Teilnehmeradressmatrix 300, 310 Lücken auftreten. Trotzdem wird auch in diesem Fall durch die in Fig. 4 dargestellte Anordnung der Teilnehmer nach einerseits dem abonnierten Dienst und andererseits dem Monat des Abonnementbeginns ermöglicht, größere zusammenhängende Blöcke von Teilnehmern mit einer Meldung zu adressieren. Die entstandenen Lücken, die durch Abonnementkündigungen bewirkt werden, können durch neu abgeschlossene Abonnements wieder geschlossen werden.

Im folgenden wird ein Beispielfall betrachtet, der sich von dem im Vorhergehenden lediglich dadurch unterscheiden soll, dass der Teilnehmer des Premium-Dienstes mit Vertragsbeginn März und Spaltennummer 4 gekündigt hat, so dass sich eine Lücke in der dritten Zeile der Teilnehmeradressmatrix 310 ergibt. Obwohl es möglich wäre, wie zuvor beschrieben zwei Nachrichten zu verwenden, und damit den Teilnehmer mit der Kündigung ebenfalls zu adressieren, wird es bevorzugt, anstatt der ersten der beiden zuvor erwähnten Nachrichten zwei Nachrichten zu versenden, nämlich eine, die die Teilnehmer mit einer Spaltennummer von 1 bis 3 und der Zeilennummer 3 adressiert, und eine weitere, die die Teilnehmer ab der Spaltennummer 5 adressiert.

Gemäß einem weiteren Ausführungsbeispiel werden die Nachrichten zusammengefasst, indem den eigentlichen Adressierungsinformationen zusätzliche, vordefinierte Beziehungsartangaben hinzugefügt werden, die angeben, in welcher Form die Adressierung vorgenommen wird, und welcher Art die durch die Adressierungsinformationen definierte Beziehung ist. Bei dem zweiten Beispielsfall könnten beispielsweise alle Teilnehmer der dritten Zeile auf einmal adressiert werden, indem durch eine zusätzliche Beziehungsartangabe angegeben wird, dass zwei Abschnitte in einer Zeile adressiert werden. Die Empfangseinrichtungen, die die Nachricht empfangen, erwarten dann eine Nachricht, die neben der Angabe der Zeilennummer vier Spaltennummern enthält, die jeweils definieren, von wo bis wo in der entsprechenden Zeile die adressierten Teilnehmerabschnitte liegen.

Nachdem im Vorhergehenden die Reduzierung der zur Verteilung an mehrere Teilnehmer erforderlichen Sendekapazität durch geeignete Anordnung der Teilnehmer in einer Teilnehmeradressmatrix beschrieben worden ist, wird auf folgende mögliche Modifizierungen hingewiesen.

Obwohl im Vorhergehenden die vorliegende Erfindung anhand von Conditional-Access-Systemen beschrieben worden ist, ist dieselbe auf beliebige Dienstbereitstellungssysteme anwendbar, bei denen Teilnehmer adressiert werden müssen, denen Attribute zugeordnet sind. Das Dienstbereitstellungssystem kann beispielsweise aus einem Netzwerk von Servern und Terminals bestehen, wobei ein Server mehrere Dienste für die Terminals zur Verfügung stellt, und die Attribute beispielsweise die Zugehörigkeit eines Terminals zu einer bestimmten Abteilung einer Firma umfassen.

Zudem wird darauf hingewiesen, dass, obwohl im Vorhergehenden beschrieben worden ist, die Anordnung der Teilnehmer in der mehrdimensionalen Teilnehmeradressmatrix derart vorgenommen wird, dass Teilnehmer mit gemeinsamem Attribut in einer Zeile, d.h. in einer Aneinanderreihung, bzw. einer Ebene angeordnet sind, Teilnehmer mit einem gemeinsamen Attribut ferner in anderen vorbestimmten Beziehungen zueinander angeordnet sein können. Es kann beispielsweise vorgesehen sein, Teilnehmer, denen ein erstes Attribut gemeinsam ist, in einer Zeile anzuordnen, und Teilnehmer, denen ein zweites Attribut gemeinsam ist, in der selben Zeile, aber lediglich in Spalten mit geradzahligem Spaltenindex anzuordnen. Auf diese Weise könnten beispielsweise alle Teilnehmer, denen das Attribut 1 und zugleich das Attribut 2 gemeinsam ist, dadurch adressiert werden, dass angezeigt wird, dass nur die Teilnehmer adressiert sind, die in der entsprechenden Zeile und in einer Spalte mit geradzahligem Spaltenindex angeordnet sind. Es könnte eine weitere vorbestimmte Beziehung darin bestehen, dass die Summe aus Zeilenindex und Spaltenindex ein beliebiges Vielfaches einer natürlichen Zahl ist.

Obwohl im Vorhergehenden jeder Zeile bzw. Ebene einer Teilnehmeradressmatrix ein Attribut zugewiesen worden ist, ist es möglich, Teilnehmer, denen zwei verschiedene Attribute gemeinsam sind, in einer vorbestimmten Beziehung zueinander anzuordnen, wie z.B. alle Teilnehmer, die den Dienst A und B abonniert haben, in einer Zeile.

Es wird ferner darauf hingewiesen, dass, obwohl im Vorhergehenden eine gemeinsame Adressierung der Mehrzahl von Teilnehmern unter Ausnutzung der Beziehung der Teilnehmer darin bestand, einen Zeilenabschnitt zu definieren bzw. eine Zeilennummer und zwei Spaltennummern anzugeben oder ein Feld zu definieren, die gemeinsame Adressierung auch anders durchgeführt werden kann. In dem Fall, dass beispielsweise alle Teilnehmer mit einem gemeinsamen Attribut adressiert werden sollen und dass dieselben in einer zweidimensionalen Teilnehmeradressmatrix derart angeordnet sind, dass die Summe aus Zeilen- und Spaltenindex ein ganzzahliges Vielfaches einer natürlichen Zahl ist, kann die gemeinsame Adressierung dieser Teilnehmer durch Angabe der natürlichen Zahl durchgeführt werden. In dem Fall, dass sich die zu adressierenden Teilnehmer in einer Zeile befinden, kann es ausreichend sein, den Zeilenindex anzugeben.

Bezugnehmend auf die gemeinsame Adressierung durch Angabe eines Feldes, wie es bezugnehmend auf Fig. 2 beschrieben wurde, wird darauf hingewiesen, dass auch bei einer höherdimensionalen Teilnehmeradressmatrix ein Feld durch zwei Matrixpositionen definiert werden kann, wobei sich die Adressaten entlang jeder Dimension zwischen den beiden Matrixpositionen befinden.

Ferner wird darauf hingewiesen, dass im Vorhergehenden lediglich zum leichteren Verständnis zwei- und dreidimensionale Matrizen verwendet wurden. Bei einer größeren Anzahl von unterschiedlichen Attributen kann es jedoch sinnvoll sein, die Anzahl von Dimensionen der Teilnehmeradressmatrix zu erhöhen. In diesem Fall können die vorbestimmten Beziehungen, in denen die Teilnehmer in der Matrix angeordnet werden, komplexer als im Vorhergehenden erwähnt sein.

In den Meldungen und Nachrichten können Anweisungen enthalten sein, die den Empfangseinrichtungen Informationen darüber geben, wie die Beziehung in diesen Nachrichten bzw. Meldungen kodiert ist, wie es im Vorhergehenden anhand einer Beziehungsartangabe exemplarische beschrieben wurde. Eine weitere Beziehungsartangabe könnte beispielsweise eine Anweisung Zeilenabschnitte_X sein, die den Empfangseinrichtungen anzeigt, dass in der Meldung hinter der Beziehungsartangabe nacheinander die Angabe des Zeilenindexes und daraufhin x-mal zwei Spaltenindizes folgen, die einen Abschnitt dieser Zeile identifizieren, innerhalb dessen sich adressierte Zeilen befinden. Eine weitere Beziehungsartangabe könnte beispielsweise eine Anweisung FELD sein, die anzeigt, dass die gemeinsame Adressierung durch eine Feldangabe bestehend aus zwei Matrixpositionen definiert ist.

Bezugnehmend auf Fig. 3 wird darauf hingewiesen, dass der Aufbau einer Teilnehmeradresse ebenfalls umgekehrt sein kann, so dass der Zeilenindex hinter dem Spaltenindex angeordnet ist. Zudem besteht bei einer höherdimensionalen Teilnehmeradressmatrix der Aufbau einer vollständigen Teilnehmeradresse aus mehr als zwei Indizes.

Ferner wird darauf hingewiesen, dass die im Vorhergehenden beschriebene Adressierung auf verschiedene Adressen eines Teilnehmers anwendbar ist, wie z.B. die Adresse der Smartcard eines Teilnehmers eines Pay-TV-Systems.

## Patentansprüche

1. Verfahren zum Adressieren von Teilnehmern in einem Dienstbereitstellungssystem durch eine zentrale Sendeeinrichtung zum Verteilen einer an eine Gruppe von Dienstteilnehmern gerichteten Nachricht an eine Empfangseinrichtung jedes Teilnehmers der Mehrzahl von Teilnehmern, wobei jedem Teilnehmer der Mehrzahl von Teilnehmern Attribute zugeordnet sind, und wobei die Teilnehmer der Mehrzahl von Teilnehmern zumindest ein Attribut gemeinsam haben, mit folgenden Schritten:
Eindeutiges Zuordnen (100) einer Teilnehmeradresse zu jedem Teilnehmer der Mehrzahl von Teilnehmern durch die zentrale Sendeeinrichtung, wobei jede Teilnehmeradresse aus einem Index pro Dimension einer mehrdimensionalen Teilnehmermatrix (140; 200; 300, 310) besteht, so dass jeder Teilnehmer einem unterschiedlichen Matrixelement der Teilnehmermatrix zugeordnet ist, das durch die Indizes definiert ist, wobei die eindeutige Zuordnung derart angepasst ist, dass die Mehrzahl von Teilnehmern, die zumindest ein Attribut gemeinsam haben, in der Teilnehmermatrix in einer vorbestimmten Beziehung zueinander angeordnet sind;
Versehen der Nachricht mit einer Angabe, die ein zusammenhängendes Feld innerhalb der Teilnehmermatrix definiert, in welchem lediglich Matrixelemente angeordnet sind, die einem der Teilnehmer der Mehrzahl von Teilnehmern oder keinem Teilnehmer zugeordnet sind, durch die zentrale Sendeeinrichtung, wodurch eine gemeinsame Adressierung derjeniger Teilnehmer der Mehrzahl von Teilnehmern erzielt wird, denen eine Teilnehmeradresse mit Indizes zugeordnet ist, die ein Matrixelement innerhalb der Teilnehmermatrix definieren;
Versenden der Nachricht an die Empfangseinrichtungen durch die zentrale Sendeeinrichtung;

2. Verfahren gemäß Anspruch 1, das ferner folgenden Schritt aufweist:
Überprüfen durch jede Empfangseinrichtung, ob dieselbe Adressat der Nachricht ist, indem dieselbe überprüft, ob die Indizes derselben ein Matrixelement definiert, welches in dem zusammenhängenden Feld enthalten ist.

3. Verfahren gemäß Anspruch 1 oder 2, bei dem die vorbestimmte Beziehung, in der die Mehrzahl von Teilnehmern mit zumindest einem gemeinsamen Attribut angeordnet sind, eine Aneinanderreihung derselben entlang der Richtung zumindest einer vorbestimmten Dimension der Teilnehmermatrix (140; 200; 300, 310) umfasst.

4. Verfahren gemäß einem der Ansprüche 1 bis 3, bei dem die Schritte des Versehens, Versendens und Überprüfens für ein weiteres zusammenhängendes Feld durchgeführt werden.

5. Verfahren gemäß Anspruch 4, bei dem die Angabe eine Zeilennummer, eine Spaltennummer oder zwei Matrixpositionen aufweist, wobei durch die Zeilennummer eine Zeile, die Spaltennummer eine Spalte und die zwei Matrixpositionen ein rechteckiges Feld definiert wird, das durch die Matrixpositionen aufgespannt wird.

6. Verfahren gemäß einem der Ansprüche 1 bis 5, bei dem das Dienstbereitstellungssystem ein System mit bedingtem Zugriff ist, und bei dem die Attribute die Dienste, die von den Teilnehmern empfangen werden sollen, oder Vertragsdaten der Verträge, mit denen die Teilnehmer die Dienste beantragt haben, umfassen.

7. Vorrichtung zum Adressieren von Teilnehmern in einem Dienstbereitstellungssystem durch eine zentrale Sendeeinrichtung zum Verteilen einer an eine Gruppe von Dienstteilnehmern gerichteten Nachricht an eine Empfangseinrichtung jedes Teilnehmers der Mehrzahl von Teilnehmern, wobei jedem Teilnehmer der Mehrzahl von Teilnehmern Attribute zugeordnet sind, und wobei die Teilnehmer der Mehrzahl von Teilnehmern zumindest ein Attribut gemeinsam haben, mit folgenden Merkmalen:
einer Einrichtung zum Eindeutigen Zuordnen (100) einer Teilnehmeradresse zu jedem Teilnehmer der Mehrzahl von Teilnehmern in der zentralen Sendeeinrichtung, wobei jede Teilnehmeradresse aus einem Index pro Dimension einer mehrdimensionalen Teilnehmermatrix (140; 200; 300, 310) besteht, so dass jeder Teilnehmer einem unterschiedlichen Matrixelement der Teilnehmermatrix zugeordnet ist, das durch die Indizes definiert ist, wobei die eindeutige Zuordnung derart angepasst ist, dass die Mehrzahl von Teilnehmern, die zumindest ein Attribut gemeinsam haben, in der Teilnehmermatrix in einer vorbestimmten Beziehung zueinander angeordnet sind;
einer Einrichtung zum Versehen der Nachricht mit einer Angabe, die ein zusammenhängendes Feld innerhalb der Teilnehmermatrix definiert, in welchem lediglich Matrixelemente angeordnet sind, die einem der Teilnehmer der Mehrzahl von Teilnehmern oder keinem Teilnehmer zugeordnet sind, in der zentralen Sendeeinrichtung, wodurch eine gemeinsame Adressierung derjeniger Teilnehmer der Mehrzahl von Teilnehmern erzielt wird, denen eine Teilnehmeradresse mit Indizes zugeordnet ist, die ein Matrixelement innerhalb der Teilnehmermatrix definieren; und
einer Einrichtung zum Versenden der Nachricht an die Empfangseinrichtungen in der zentralen Sendeeinrichtung.

8. Vorrichtung gemäß Anspruch 6, die ferner folgendes Merkmal aufweist:
eine Einrichtung zum Überprüfen in jeder Empfangseinrichtung, ob dieselbe Adressat der Nachricht ist, indem dieselbe überprüft, ob die Indizes derselben ein Matrixelement definiert, welches in dem zusammenhängenden Feld enthalten ist.

9. Vorrichtung gemäß Anspruch 7 oder 8, bei der die vorbestimmte Beziehung, in der die Mehrzahl von Teilnehmern mit zumindest einem gemeinsamen Attribut angeordnet sind, eine Aneinanderreihung derselben entlang der Richtung zumindest einer vorbestimmten Dimension der Teilnehmermatrix (140; 200; 300, 310) umfasst.

10. Vorrichtung gemäß einem der Ansprüche 7 bis 9, bei dem die Schritte des Versehens, Versendens und Überprüfens für ein weiteres zusammenhängendes Feld durchgeführt werden.

11. Vorrichtung gemäß Anspruch 10, bei der die Angabe eine Zeilennummer, eine Spaltennummer oder zwei Matrixpositionen aufweist, wobei durch die Zeilennummer eine Zeile, die Spaltennummer eine Spalte und die zwei Matrixpositionen ein rechteckiges Feld definiert wird, das durch die Matrixpositionen aufgespannt wird.

12. Vorrichtung gemäß einem der Ansprüche 7 bis 11, bei der das Dienstbereitstellungssystem ein System mit bedingtem Zugriff ist, und bei dem die Attribute die Dienste, die von den Teilnehmern empfangen werden sollen, oder Vertragsdaten der Verträge, mit denen die Teilnehmer die Dienste beantragt haben, umfassen.

## Claims

1. Method for addressing subscribers in a service provision system by a central transmission means for distributing a message directed to a group of service subscribers to a receiving means of every subscriber of the plurality of the subscribers, wherein attributes are associated to every subscriber of the plurality of subscribers, and wherein the subscribers of the plurality of the subscribers have at least one attribute in common, comprising:
uniquely associating (100) a subscriber address to every subscriber of the plurality of subscribers by the central transmitting means, wherein every subscriber address consists of one index per dimension of a multi-dimensional subscriber matrix (140; 200; 300, 310), so that every subscriber is associated to a different matrix element of the subscriber matrix, which is defined by the indices, wherein the unique association is adapted such that the plurality of subscribers having at least one attitude in common are arranged in a predetermined relationship in the subscriber matrix;
providing the message with an indication defining a contiguous field within the subscriber matrix, in which merely matrix elements are arranged, which are associated to one subscriber of the plurality of subscribers or no subscriber, by the central transmitting means, whereby a common addressing of those subscribers of the plurality of subscribers is obtained, to which a subscriber address with indices is associated, which defines a matrix element within the subscriber matrix;
transmitting the message to the receiving means by the central transmitting means.

2. Method according to claim 1, further comprising:
checking by every receiving means whether it is the addressee of the message, by checking whether indices define a matrix element, which is contained in the contiguous field.

3. Method according to claim 1 or 2, wherein the predetermined relationship in which the plurality of subscribers with at least one common attribute are arranged, comprises a run of them along the direction of at least one predetermined dimension of the subscriber matrix (140; 200; 300, 310).

4. Method according to one of claims 1 to 3, wherein the steps of providing, transmitting and checking are performed for a further contiguous field.

5. Method according to claim 4, where the indication comprises a row number, a column number or two matrix positions, wherein the row number defines a row, the column number a column and two matrix positions a square field, which is spread out by the matrix positions.

6. Method according to one of claims 1 to 5, wherein the service provision system is a conditional access system, and where the attributes comprise the services to be received by the subscribers or contract data of the contracts by which the subscribers have applied for the services.

7. Apparatus for addressing subscribers in a service providing system by a central transmitting means for distributing a message directed to a group of service subscribers to a receiving means of every subscriber of the plurality of the subscribers, wherein attributes are associated to every subscriber of the plurality of subscribers, and wherein the subscribers of the plurality of subscribers have at least one attribute in common, comprising:
uniquely associating (100) a subscriber address to every subscriber of the plurality of subscribers by the central transmitting means, wherein every subscriber address consists of one index per dimension of a multi-dimensional subscriber matrix (140; 200; 300, 310), so that every subscriber is associated to a different matrix element of the subscriber matrix, which is defined by the indices, wherein the unique association is adapted such that the plurality of subscribers having at least one attitude in common are arranged in a predetermined relationship in the subscriber matrix;
providing the message with an indication defining a contiguous field within the subscriber matrix, in which merely matrix elements are arranged, which are associated to one subscriber of the plurality of subscribers or no subscriber, by the central transmitting means, whereby a common addressing of those subscribers of the plurality of subscribers is obtained, to which a subscriber address with indices is associated, which defines a matrix element within the subscriber matrix;
transmitting the message to the receiving means by the central transmitting means.

8. Apparatus according to claim 6, further comprising:
checking by every receiving means whether it is the addressee of the message, by checking whether indices define a matrix element, which is contained in the contiguous field.

9. Apparatus according to claim 7 or 8, wherein the predetermined relationship in which the plurality of subscribers with at least one common attribute are arranged, comprises a sequence of them along the direction of at least one predetermined dimension of the subscriber matrix (140; 200; 300, 310).

10. Apparatus according to one of claims 7 to 9, wherein the steps of providing, transmitting and checking are performed for a further contiguous field.

11. Apparatus according to claim 10, where the indication comprises a row number, a column number or two matrix positions, wherein the row number defines a row, the column number a column and two matrix positions a square field, which is spread out by the matrix positions.

12. Apparatus according to one of claims 7 to 11, wherein the service provision system is a system with conditional access, and where the attributes comprise the services to be received by the subscribers or contract data of the contracts by which the subscribers have applied for the services.

## Revendications

1. Procédé pour l'adressage de participants dans un système de mise à disposition de services par un dispositif de transmission central, pour la distribution d'un message adressé à un groupe de participants à un service à un dispositif de réception de chaque participant de la pluralité de participants, à chaque participant de la pluralité de participants étant associés des attributs et les participants de la pluralité de participants ayant au moins un attribut en commun, aux étapes suivantes consistant à :
associer (100) de manière univoque une adresse de participant à chaque participant de la pluralité de participants par le dispositif de transmission central, chaque adresse de participant consistant en un indice par dimension d'une matrice de participants multidimensionnelle (140 ; 200 ; 300, 310), de sorte que chaque participant soit associé à un élément de matrice différent de la matrice de participants défini par les indices, l'association univoque étant adaptée de sorte que la pluralité de participants ayant au moins un attribut en commun soient disposés dans la matrice de participants selon un rapport prédéterminé entre eux ;
pourvoir le message d'une indication définissant un champ cohérent dans la matrice de participants dans lequel ne sont disposés que des éléments de matrice associés à l'un des participants parmi la pluralité de participants, ou à aucun participant, par le dispositif de transmission central, d'où il est obtenu un adressage commun des participants parmi la pluralité de participants auxquels est associée une adresse de participant aux indices définissant un élément de matrice dans la matrice de participants ;
envoyer le message aux dispositifs de réception par le dispositif de transmission central.

2. Procédé selon la revendication 1, présentant, par ailleurs, l'étape suivante consistant à :
vérifier par le dispositif de réception si ce dernier est le destinataire du message, en ce qu'il vérifie si les indices de ce dernier définissent un élément de matrice contenu dans le champ cohérent.

3. Procédé selon la revendication 1 ou 2, dans lequel le rapport prédéterminé selon lequel sont disposés la pluralité de participants avec au moins un attribut commun comprend une juxtaposition de ceux-ci dans le sens d'au moins une dimension prédéterminée de la matrice de participants (140 ; 200 ; 300, 310).

4. Procédé selon l'une des revendications 1 à 3, dans lequel les étapes de pourvoiement, d'envoi et de vérification sont réalisées pour un autre champ cohérent.

5. Procédé selon la revendication 4, dans lequel l'indication présente un numéro de ligne, un numéro de colonne ou deux positions de matrice, par le numéro de ligne étant définie une ligne, par le numéro de colonne une colonne et par les deux positions de matrice un champ rectangulaire qui est fixé par les positions de matrice.

6. Procédé selon l'une des revendications 1 à 5, dans lequel le système de mise à disposition de services est un système à accès conditionnel et dans lequel les attributs incluent les services devant être reçus par les participants, ou les données contractuelles des contrats par lesquels les participants ont sollicité les services.

7. Dispositif pour l'adressage de participants dans un système de mise à disposition de services par un dispositif de transmission central, pour la distribution d'un message adressé à un groupe de participants à un service à un dispositif de réception de chaque participant parmi la pluralité de participants, à chaque participant parmi la pluralité de participants étant associés des attributs et les participants parmi la pluralité de participants ayant au moins un attribut en commun, aux caractéristiques suivantes :
un dispositif destiné à associer (100) de manière univoque une adresse de participant à chaque participant parmi la pluralité de participants dans le dispositif de transmission central, chaque adresse de participant consistant en un indice par dimension d'une matrice de participants multidimensionnelle (140 ; 200 ; 300, 310), de sorte que chaque participant soit associé à un élément de matrice différent de la matrice de participants défini par les indices, l'association univoque étant adaptée de sorte que la pluralité de participants ayant au moins un attribut en commun soient disposés dans la matrice de participants selon un rapport prédéterminé entre eux ;
un dispositif destiné à pourvoir le message d'une indication définissant un champ cohérent dans la matrice de participants dans lequel ne sont disposés que des éléments de matrice associés à l'un des participants parmi la pluralité de participants, ou à aucun participant, dans le dispositif de transmission central, d'où il est obtenu un adressage commun des participants parmi la pluralité de participants auxquels est associée une adresse de participant aux indices définissant un élément de matrice dans la matrice de participants ; et
un dispositif destiné à envoyer le message aux dispositifs de réception dans le dispositif de transmission central.

8. Dispositif selon la revendication 7, présentant, par ailleurs, la caractéristique suivante :
un dispositif destiné à vérifier dans chaque dispositif de réception si ce dernier est le destinataire du message, en ce qu'il vérifie si les indices de ce dernier définissent un élément de matrice contenu dans le champ cohérent.

9. Dispositif selon la revendication 7 ou 8, dans lequel le rapport prédéterminé selon lequel sont disposés la pluralité de participants avec au moins un attribut commun comprend une juxtaposition de ceux-ci dans le sens d'au moins une dimension prédéterminée de la matrice de participants (140 ; 200 ; 300, 310).

10. Dispositif selon l'une des revendications 7 à 9, dans lequel les étapes de pourvoiement, d'envoi et de vérification sont réalisées pour un autre champ cohérent.

11. Dispositif selon la revendication 10, dans lequel l'indication présente un numéro de ligne, un numéro de colonne ou deux positions de matrice, par le numéro de ligne étant définie une ligne, par le numéro de colonne une colonne et par les deux positions de matrice un champ rectangulaire qui est fixé par les positions de matrice.

12. Dispositif selon l'une des revendications 7 à 11, dans lequel le système de mise à disposition de services est un système à accès conditionnel et dans lequel les attributs incluent les services devant être reçus par les participants, ou les données contractuelles des contrats par lesquels les participants ont sollicité les services.
